# EUROPEAN PATENT APPLICATION

(11) **EP 4 368 545 A1**
(43) Date of publication of application: **15.05.2024**
(21) Application number: 22206100.4
(22) Date of filing: 08.11.2022
(51) Int. Cl.: B65G 65/40, B65D 88/66, B65G 65/44

(54) **SYSTEMS AND METHODS FOR MOVING A PRODUCT IN A CONTAINER**

(71) Applicant: Saravanos Process++ SRL, 1050 Ixelles (BE)
(72) Inventor: Panagiotis, Saravanos, 1050 Brussels (BE); Ioannis, Saravanos, 1930 Zaventem (BE)
(74) Representative: Calysta NV

(57) **Abstract**

A system for moving a product, comprising: a container configured to receive the product, the container comprising a product outlet arranged in a lower part of the container; an actuator system configured to generate a non-contact force; a frame, wherein the frame is: arranged within the container and configured to be in contact with the product when the product is arranged in the container, configured to be moveable relative to the container, configured to be subjectable to the non-contact force generated by the actuator system; a control unit configured to control the actuator system, wherein the control unit is configured to generate changes in the non-contact force for moving the frame relative to the container.

## Description

The present invention relates to the field of moving a product, wherein said product is arranged in a container such as a hopper. The invention can e.g. be used for in-line mixing of solids with liquids.

Hoppers usually have a product outlet at a lower part of the hopper, such that the product arranged in the hopper can be moved to the product outlet with the aid of gravity. However, in some cases, some or all of the product gets stuck, e.g. because the product outlet forms a bottleneck. This can e.g. occur when the product contains solid materials such as powders.

To aid the movement of the product, a known solution is to subject the product in the container to additional excitations. This is e.g. done by vibrating the hopper or elements in the hopper. However, existing solutions have not been found satisfying. Issues include high maintenance requirements, wear, failure of components (which may lead to contamination of the product).

It is an object of the invention to overcome the disadvantages of the prior art, or at least provide an alternative to the prior art.

This object is achieved with a system for moving a product, comprising:
- a container configured to receive the product, the container preferably comprising a product outlet arranged in a lower part of the container;
- an actuator system configured to generate a non-contact force;
- a frame, wherein the frame is:
   - arranged within the container and configured to be in contact with the product when the product is arranged in the container,
   - configured to be moveable relative to the container,
   - configured to be subjectable to the non-contact force generated by the actuator system;
- a control unit configured to control the actuator system, wherein the control unit is configured to generate changes in the non-contact force for moving the frame relative to the container.

The invention thus relates to a system for moving a product. The product can e.g. comprise a solid, e.g. small particle solids, e.g. powder, granules, pellets. The product can e.g. comprise a liquid. The system comprises a container configured to receive the product. Optionally, the container comprises a product inlet for receiving the product. The product may e.g. be provided from an upstream forcing unit, such as a pump, to the product inlet. It is also possible that product is provided to the product inlet by means of gravity. The product inlet can e.g. be connected to a product tank or silo, which optionally is arranged at a higher level than the product inlet. The product inlet can e.g. be arranged in an upper part of the container. It is also possible that the container is configured for the product to be arranged manually into the container, e.g. by an operator. The container can e.g. comprise an open top or a top that can be opened and closed manually by an operator.

The container optionally comprises a product outlet, arranged at a lower part of the container. The product outlet can e.g. be arranged in a bottom of the container. The product outlet is configured to guide the product out of the container, in or on a downstream element. The downstream element can e.g. be a pipe, a tank, a conveyor belt, a packaging, or similar. In case of a pipe, it is possible that a liquid or gas is flowing in the pipe or added to the pipe further downstream. For example, the product outlet can be fluidly connected to a T-section of the pipe. Optionally, a valve is arranged between the product outlet and the downstream element. The valve can be a manual valve or comprise an actuator.

The system can e.g. be used in a production process, e.g. in a foodstuff (e.g. in the dairy, food, or beverage industry) or chemical production process. The product can e.g. be an ingredient or additive that is to be mixed with a further product, e.g. using an in-line mixing device arranged downstream of the container. The in-line mixing device can e.g. shear mixing device. It is also possible that the product can e.g. be a finished product that is guided to a packaging via the container, e.g. wherein the packing is arranged below the container.

The container, in particular the size of the container and the product outlet, can e.g. be configured to allow a flow rate of at least 1 ton/hrof product, e.g. at least 3 ton/hr, e.g. at least 5 ton/hr.

Since the product outlet is arranged at a lower part of the container, the product will move towards the product outlet by means of gravity. Usually, the product outlet is smaller than the largest diameter of the container. To guide all product towards the product outlet, the container may comprise conical side walls, such that the diameter of the container decreases towards the bottom of the container. In embodiments, the container may be a hopper or a funnel.

Without additional means, it is possible that (part of) the (e.g. solid material of the) product gets stuck and is not moved towards the product outlet. In case the product comprises a liquid, , air is sometimes moved through the product outlet, said air causing cavitation and/or damages to downstream components such as pumps. To overcome these issues, the system can be provided with an actuator system that moves a frame that is arranged in the container.

The actuator system is in particular configured to generate a non-contact force. A non-contact force is a force which is exerted onto another element without physical contact. Within the context of this disclosure, the non-contact force is an electromagnetic force, a magnetic force, or an electric force. The non-contact force is not a gravity force or a nuclear force.

The actuator system may comprise one or more non-contact actuators for generating the non-contact force. When the actuator system comprises a plurality of non-contact actuators, each non-contact actuator may be configured to generate non-contact sub-force, which together contribute to the non-contact force.

Within this context, an actuator is considered any element that can generate the non-contact force, in particular a change in the non-contact force. The non-contact actuator can e.g. be an electromagnetic element configured to generate a (change in) electromagnetic or magnetic field, e.g. by letting a current flow, e.g. an alternating current, e.g. through a coil. The non-contact actuator can e.g. be an electromagnetic motor or actuator, e.g. an electromagnetic pulse motor. The non-contact actuator can e.g. comprise a permanent magnet and an element configured to move the permanent magnet.

The frame is arranged within the container. That is, during use the frame is arranged in the interior of the container. The frame is moveable relative to the container. The frame is in contact with the product when product is arranged in the container. The frame can have any suitable shape. Generally, the frame can at least partially correspond to the shape of the container. For example, when the container has a conical shape, the frame may also have a conical shape.

The frame can e.g. comprise multiple (e.g. three) vertical ribs and multiple (e.g. three) horizontal ribs connected to each other. For example, the horizontal ribs can substantially form a circle, wherein a first horizontal rib forms a circle with a first diameter and a second horizontal rib forms a circle with a second diameter, wherein the first horizontal rib is arranged higher than the second horizontal rib, and the first diameter is larger than the second diameter.

The frame can have various shapes, but generally, if the frame comprises openings between ribs, said openings are multiple orders of magnitude larger than the product or the solid materials in the product. Thus, the frame does not function as a sieve.

Optionally, the frame extends through the product outlet. For example, the frame may comprise at least one rib, e.g. one or all vertical ribs, extending through the product outlet. This may improve the moving of the product.

The frame is configured to be subjectable to the non-contact force generated by the actuator system. Thus, the actuator system can exert the non-contact force onto the frame without coming into physical contact with the frame. In particular, the frame is subjectable to an electromagnetic force, a magnetic force, or an electric force. The frame may e.g. comprise one or more (permanent) magnets. The frame may e.g. comprise ferromagnetic material. For example, the frame may comprise a plurality of permanent magnets, each permanent magnet being arranged at an intersection where a vertical rib and a horizontal rib are connected to each other.

The system further comprises a control unit. The control unit controls the actuator system, in particular the one or more non-contact actuators in the actuator system. For example, the control unit can control the current flowing through (a coil of) a non-contact actuator, of the movement of a permanent magnet of the non-contact actuator.

The control unit is in particular configured to generate changes in the non-contact force. These changes cause the frame to move relative to the container. The control unit may in particular be configured to move the frame in vibration. For example, the non-contact force may change continuously, e.g. according to a sinusoidal patter at a first frequency.

Since the frame is in contact with the product, the movement of the frame also causes movement of the product. Energy is transferred to the product as movement. The movement of the product helps the guidance of the product, in particular those parts that are stuck. When the product comprises liquid, any gas may be removed by the moving of the product. When the product is a solid that is vibrated by the frame, this may be referred to as a fluidized solid.

Providing the frame in the container has the advantage that only the frame needs to be moved, and not the container itself. This reduces wear and failure of the container or other structural components.

Using the non-contact force to move the frame has the advantages that no physical connections must be made between the actuator system and the frame. Such connections, e.g. gaskets, can break which causes contamination of the product and renders the system unusable, at least for a while. The system described herein thus provides reliable solutions that requires less maintenance.

The control unit may e.g. comprise a processing unit to process signals or measurements. The control unit may e.g. comprise a memory for storing information, such as data, measurements, and/or computer-readable instructions. The control unit may comprise one or more communication terminals for receiving input signals and/or measurement signals. The control unit may comprise one or more communication terminals for communicating output signals and/or control signals. The control unit may be configured to communicate, wired or wireless, with a user equipment device, such as a computer, tablet, smartphone. The control unit may be embodied in any suitable way, including a programmable logic controller (PLC), integrated circuit, or computer. The control unit may control components with control signals, which can be communicated wired or wireless according to any suitable communication method or protocol. The control unit may comprise one or more input terminals, output terminals, or communication terminals for communicating with other components.

In embodiments, the actuator system comprises a first non-contact actuator, wherein the control unit is configured to control the first non-contact actuator to generate a non-contact force changing at a first frequency. For example, the non-contact force may change continuously, e.g. according to a sinusoidal patter at the first frequency. In these embodiments, the frame can thus be vibrated at the first frequency. The frequency may be chosen in function of the product and/or geometry of the frame. In embodiments, the frequency can e.g. be between 1-1000 Hz, e.g. between 10-500 Hz, e.g. between 20-200 Hz. In embodiments, the frequency can e.g. be an ultrasonic frequency.

In embodiments, the control unit is configured to control the actuator system to generate: a first non-contact sub-force changing at a first frequency, and a second non-contact sub-force changing at a second frequency. The non-contact force comprises at least the first non-contact sub-force and the second non-contact sub-force. Thus, the frame is subjected to both the first and the second non-contact sub-force. The first frequency is different from the second frequency.

The inventors have found that subjecting the frame to two different frequencies, improves the effect it has on the product. The combination of the two different frequencies increases the range of movements made by the frame, and thereby the range of forces that the product is subjected to. When only a single frequency is used, some parts of the product or frame are e.g. only subjected to little movement, or are e.g. not much affected by said frequency.

Optionally, the control unit is configured to generate the first and second non-contact sub-force simultaneously. The frame is thus being subjected to a force and movement that is the combination of at least two frequencies.

Optionally, the control unit is configured to generate the first non-contact sub-force for a longer period of time than the second non-contact sub-force. It may e.g. be sufficient to only provide the second frequency for shorter periods of time to still provide sufficient energy to the product. This embodiment can then save energy consumption of the system while still achieving satisfactory results.

In embodiments, the first frequency and the second frequency generate a beat pattern as interference pattern. Beats are the periodic and repeating fluctuations in the intensity of the non-contact force when two non-contact sub-forces of close frequencies interfere with one another. The beat frequency is equal to the difference in frequency of the first and second frequency. For example, the difference between the first and second frequency may be between 1-20 Hz, e.g. between 1-10 Hz, e.g. between 1-5 Hz. A beat pattern is characterized by a wave whose amplitude is changing at a regular rate. When constructive interference occurs between the first and second non-contact sub-force, the resulting non-contact force is large. This corresponds to a peak on the beat pattern. When destructive interference occurs between the first and second non-contact sub-force, the resulting non-contact force is zero; this corresponds to a point of no displacement on the beat pattern.

The inventors have found that the beat pattern has an advantageous effect on the movement of the product. It is possible to subject the frame to varying movements which transfers energy to the product in ways that help move the product if it gets stuck. Using two frequencies that are close to each other, makes the control and design relatively simple. For example, similar actuators can be used to provide the first and second non-contact sub-forces. Moreover, the frequencies can be relatively low frequencies, which such that the actuator system consumes relatively little energy. For example, the first and second frequency can e.g. be between 1-1000 Hz, e.g. between 10-500 Hz, e.g. between 20-200 Hz.

In embodiments, the second frequency is an ultrasonic frequency. Optionally, the first frequency is not an ultrasonic frequency, wherein e.g. the first frequency can be between 1-1000 Hz, e.g. between 10-500 Hz, e.g. between 20-200 Hz. Using the ultrasonic frequency allows to provide a lot of energy to the product, which may be beneficial for the movement of the product. In this embodiment it may in particular be advantageous if the control unit is configured to generate the first non-contact sub-force for a longer time than the second non-contact sub-force. This reduces the energy consumption of the system. For example, the control unit can be configured to provide the first non-contact sub-force continuously for an extended period of time, e.g. at least a at least 2 minutes, and the second non-contact sub-force for a short period of time, e.g. 2-5 second, periodically, e.g. every 10-30 seconds.

In embodiments, the actuator system comprises at least a first non-contact actuator and a second non-contact actuator, wherein the control unit is configured to: control the first non-contact actuator to generate the first non-contact sub-force; and control the second non-contact actuator to generate the second non-contact sub-force. Using the two non-contact actuators entails that the frame is subjected to both actual movements, which may improve the movement of the frame.

In embodiments, the actuator system comprises a single non-contact actuator configured to generate the non-contact force comprising the first non-contact sub-force and the second non-contact sub-force. For example, the non-contact force may be a combination of the first and second frequency.

In embodiments, the control unit is configured to move the frame relative to the container in a movement range of 0.1-5 mm, e.g. 0.5-3 mm.

In embodiments, the actuator system is arranged outside of the container. Being arranged outside of the container is advantageous for maintenance, and avoids that the equilibrium system takes up too much space within the container.

In embodiments, the system further comprises an equilibrium system configured to position the frame in an equilibrium position. The equilibrium system may e.g. be configured to exert one or more biasing force on the frame, said biasing forces biasing the frame to the equilibrium position. The equilibrium position may e.g. entail that the frame is centred within the container, wherein for example a longitudinal axis of the container coincides with a longitudinal axis of the frame. In the equilibrium position, the frame may e.g. be at a distance from the container that is between 1-10 mm, e.g. 3-8 mm, e.g. 4-6 mm.

In embodiments, the equilibrium system is configured to provide a biasing force that causes the frame to levitate contactless within the container in the equilibrium position. In this context, contactless entails that the frame is not in contact with the container or the equilibrium system, but contact with the product is still possible during use. The biasing force is thus a non-contact force. The equilibrium can e.g. comprise a plurality of (permanent or electro)magnets. Said magnets may e.g. be arranged on positions distributed over the housing, but on the outside of the housing. The magnets may e.g. be arranged at positions where in the vicinity magnets of the frame are configured to be arranged. The magnets of the equilibrium system ma e.g. be arranged at a lower position than an associated magnet of the frame. Advantageously, the levitation of the frame without contact, avoids wear and risk of failure of components that would otherwise provide said contact.

In particular further embodiments, the equilibrium system comprises a plurality of permanent magnets arranged outside of the container. Being arranged outside of the container is advantageous for maintenance, and avoids that the equilibrium system takes up too much space within the container. Optionally, the plurality of permanent magnets are physically attached to the container. For example, the system may have a magnet holder for each holder, wherein the magnet holder is attached to or protruding from an outside of the container.

In embodiments, the equilibrium system comprises at least one resilient member configured to exert a biasing force onto the frame. The resilient member may e.g. be a mechanical spring, a hydraulic spring, or a pneumatic spring. Thus, in these embodiments the frame is positioned in the equilibrium position using contact forces, but moved using non-contact forces.

In embodiments, the frame comprises at least a removable position and an operational position, wherein the frame is configured to be moved from the removable position to the operational position by rotating the frame around a longitudinal axis. The removable position allows to remove the frame from the container, which can e.g. be required for cleaning or maintenance. In particular when the system comprises an equilibrium system, the biasing forces must be overcome to allow removing the frame. When the equilibrium comprises magnets, one possible solution can be the rotation of the frame, such that the magnets of the equilibrium system are no longer aligned with the magnets of the frame.

In embodiments, the system is arranged on a movable unit. The moveable unit may e.g. comprise a plurality of wheels for moving the moveable unit. The moveable unit may e.g. comprise a tabletop, wherein the product opening of the container is an opening in the moveable unit.

The invention further relates to a method for moving a product. Although the method can be performed with the system according to the invention; neither the system, nor the method is limited thereto. Features explained herein with reference to the system have the same meaning with respect to the method unless explicitly defined otherwise. Features explained with reference to the system can be applied mutatis mutandis to the method to achieve the similar advantages, and vice versa.

One or more objects of the invention can be achieved with a method for moving a product, comprising a step of using a system according to any of the embodiments described herein.

One or more objects of the invention can be achieved with a method for moving a product, wherein optionally use is made of a system according to any of the embodiments described herein, the method comprising the following steps:
- arranging the product in a container, wherein a frame is arranged in the container and the frame is in contact with the product,
- generating a non-contact force
- subjecting the frame to the non-contact force,
- generating changes in the non-contact force for moving the frame relative to the container.

In embodiments, the method further comprises a step of generate a first non-contact sub-force changing at a first frequency, and generate a first non-contact sub-force changing at a first frequency.

In embodiments, the first frequency and the second frequency generate a beat pattern as interference pattern.

In embodiments, the second frequency is an ultrasonic frequency. Optionally, the first frequency is not an ultrasonic frequency.

In embodiments, the first and second non-contact sub-forces are generated simultaneously.

In embodiments, the first non-contact sub-force is generated for a longer period of time than the second non-contact force.

In embodiments, the method further comprises a step of providing a biasing force with an equilibrium system, wherein said biasing force causes the frame to levitate contactless within the container in an equilibrium position.

The invention further relates to non-transitory computer-readable instructions configured to, when executed, cause a control unit of a system to perform the method according to any of the embodiments described herein. Said system may e.g. be according to any of the embodiments described herein. The non-transitory computer-readable instructions may e.g. be configured to cause an actuator system to provide non-contact sub-forces according to any of the embodiments described herein.

Exemplary embodiments of the invention are described using the figures. It is to be understood that these figures merely serve as example of how the invention can be implemented and are in no way intended to be construed as limiting for the scope of the invention and the claims. Like features are indicated by like reference numerals along the figures. In the figures:
Fig 1a: schematically illustrates a system for moving a product;
Fig. 1b: schematically illustrates a top view of the system;
Fig. 1c: schematically illustrates the cross-section AA indicated in fig. 1b;
Fig. 1d: schematically illustrates an enlarged view of the circle B indicated in fig. 1a;
Fig. 1e: schematically illustrates an enlarged view of the circle C indicated in fig. 1c;
Fig. 1f: schematically illustrates an enlarged view of the circle D indicated in fig. 1c;
Fig. 2a: schematically illustrates a system for moving a product;
Fig. 2b: schematically illustrates another view of the system of fig. 2a;
Fig. 3: schematically illustrates a system for moving a product having two non-contact actuators.

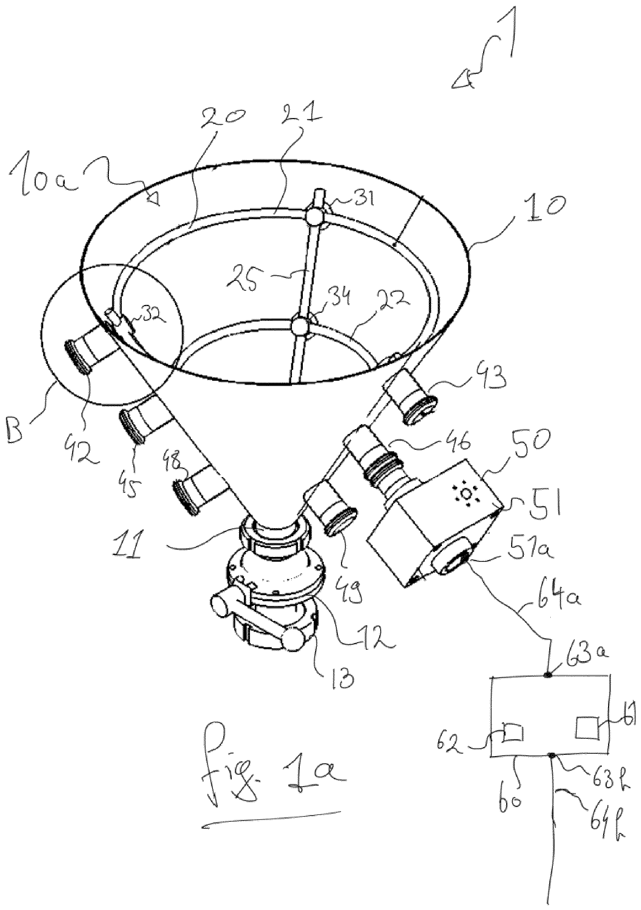

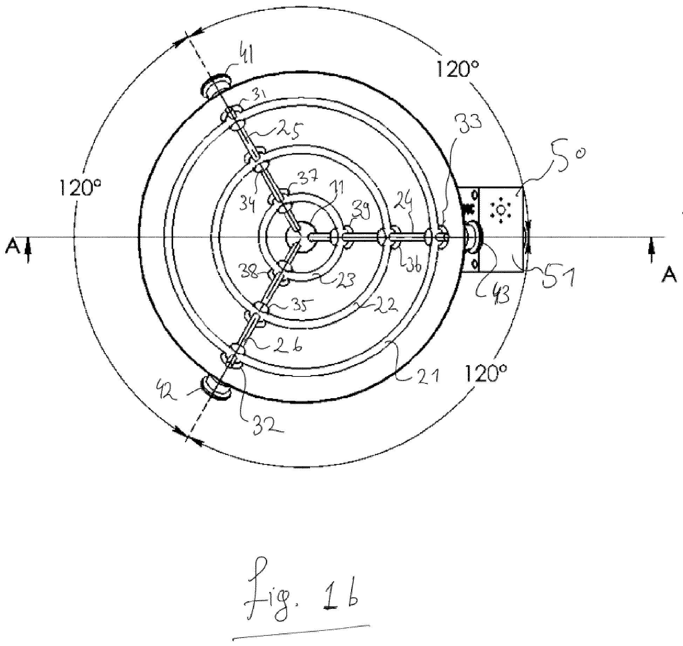

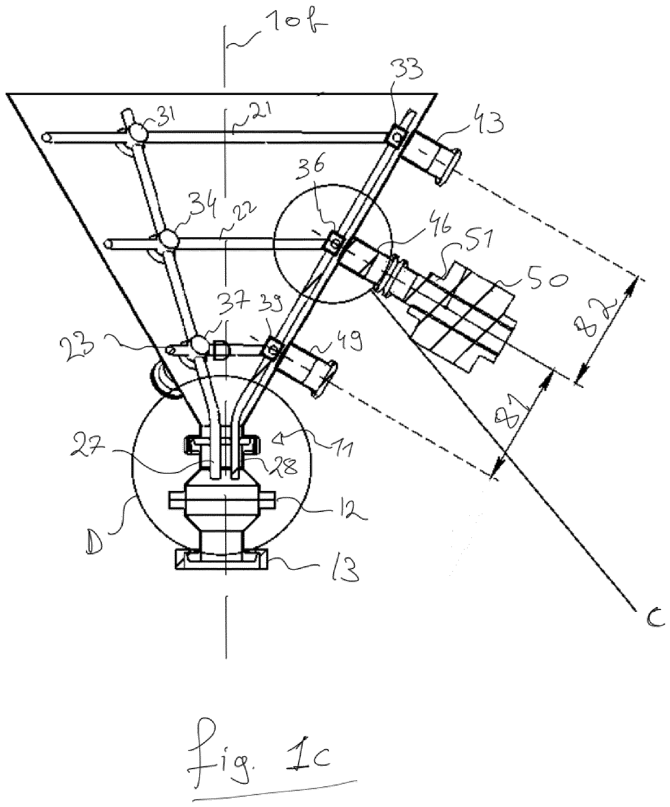

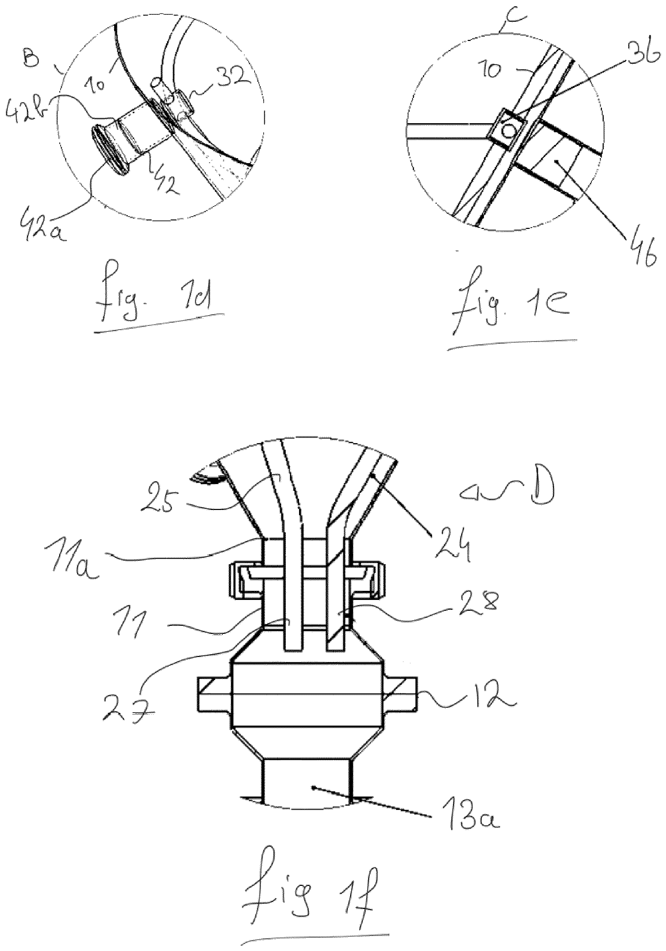

Figs. 1a-1f schematically illustrates a system 1 for moving a product, wherein Fig 1a schematically illustrates the system 1 for moving a product; Fig. 1b schematically illustrates a top view of the system 1; Fig. 1c schematically illustrates the cross-section AA indicated in fig. 1b; Fig. 1d schematically illustrates an enlarged view of the circle B indicated in fig. 1a; Fig. 1e schematically illustrates an enlarged view of the circle C indicated in fig. 1c; and Fig. 1f schematically illustrates an enlarged view of the circle D indicated in fig. 1c.

The system 1 comprises a container 10, which in this example is a hopper 10. The hopper 10 has an open top which serves as product inlet 10a, such that product can be arranged into the hopper 10. The product can e.g. comprise a solid, e.g. a powder, granules, or pellets. The product can e.g. be an ingredient being used in a production process, e.g. for making a foodstuff or in a chemical process.

The hopper 10 further has a product outlet 11 which is arranged in a lower part of hopper 10, in particular in the bottom of the hopper 10. The product is moved to the product outlet 11 with the help of gravity. The product inlet 10a is larger than the product outlet 11. In the shown example the hopper 10 has a conical side wall between the product inlet 10a and the product outlet 11, but in other embodiments it is possible that a part of the side wall of the container is completely vertical. A valve 12 is arranged below the product outlet 11 which can be arranged manually from a closed position to an open position. A flange 13 allows to connect the system 1 to further elements, e.g. a pipe.

The system 1 comprises a frame 20 which is arranged in the hopper 10. When the product is arranged in the hopper 10, the frame 20 comes into contact with the product. The frame comprises a first horizontal rib 21, a second horizontal rib 22, and a third horizontal rib 23. In use, the first horizontal rib 21 is arranged higher than the second horizontal rib 22, and the second horizontal rib 22 is arranged higher than the third horizontal rib 23. The horizontal ribs 21, 22, 23 each form a circle. A first diameter of the circle formed by the first horizontal rib 21 is larger than a second diameter of the circle formed by the second horizontal rib 22, which is turn is larger than a second diameter of the circle formed by the third horizontal rib 23. As such, the frame 20 is also conically shaped.

The frame 20 further comprises a first vertical rib 24, a second vertical rib 25, and a third vertical rib 26. The vertical ribs 24-26 are each connected to each of the horizontal ribs 21-23 for forming the frame 20. To form the conical shape, the vertical ribs 24-26 are not arranged completely vertical, but rather at an angle corresponding to the conical side wall of the hopper 10. Fig. 1b illustrates that the vertical ribs 24-26 are equally divided, being spaced 120 degrees from each other.

The illustrated shape of the frame 20 is an advantageous embodiment for covering a large part of the container 10. It will be understood, however, that if the container 10 does not have circular cross-section as in the shown example, the horizontal ribs 21-23 can form another shape than the circles as illustrated. Moreover, it is not required in all embodiments that the frame 20 comprises multiple horizontal ribs 21-23, but rather just one horizontal rib 21-23.

Fig. 1c illustrates a distance 81 and a distance 82 between various magnets 43, 46, 49 (which are elaborated on further below), which also corresponds to the distances between the horizontal ribs 21, 22, 23 of the frame 20. It can be seen that these distances 81, 82 are relatively large. The openings formed between various ribs 21-26 of the frames are therefore also relatively large, generally multiple orders of magnitude larger than the solid materials in the product. It can be understood, as such, that the frame 20 does not function as a sieve or something similar.

The circle D in fig. 1c, which is shown enlarged in fig. 1f, illustrates that the frame 20 extends through the product outlet 11. A lower end part 27 of the second vertical rib 25 and a lower end part 28 of the first vertical rib 24 are visible in this cross-section, but it will be understood that the third vertical rib 26 comprise a similar lower end part. With the lower end parts extending through the product outlet, the movement of the frame 20 can move the product, when the product gets stuck in the product outlet 11. Fig. 1f further illustrates that the product outlet 11 is arranged in a bottom 11a of the hopper 10.

It will be understood, however, that many variations of the shape of the frame 20 are possible, e.g. depending on the shape and size of the container. The horizontal and vertical ribs 21-26 can be made of any suitable material, e.g. depending on the products to be used.

The frame 20 is configured to be moved relative to the hopper 10, to enhance the movement of the product towards the product outlet 11. Advantageously, the frame 20 is moved using a non-contact force. To enable this, the frame 20 is made subjectable to said non-contact force. In the shown example, this is achieved because the frame 20 comprises a plurality of permanent magnets 31, 32, 33, 34, 35, 36, 37, 38, 39 divided over the frame 20. As such, the non-contact force, being an electromagnetic force, can move the frame 20. In particular, the permanent magnets are arranged on the locations where the horizontal ribs 21-23 and vertical ribs 24-26 intersect. In other embodiments, it is also possible that the frame 20 comprises or is made of ferromagnetic material.

The system 1 comprises an actuator system 50 which in this example comprises one non-contact actuator 51. The actuator 51 is in this example an electromagnetic pulse motor which can generate electromagnetic pulses, and thereby exert an electromagnetic force onto the permanent magnets 31-39 of the frame 20. It is envisaged that the actuator 51 can in other embodiments be embodied according as any suitable actuator being able to generate an electromagnetic force, magnetic force, or electric force, which can be exerted on the frame 20.

Fig. 1a schematically illustrates that the system 1 can comprises a control unit 60. The control unit 60 is configured to control the actuator system 50. In this example, the control unit 60 controls actuator 51 via control signal 64a, which is transmitted via communication terminals 51a, 63a. The control signal 64a can be a wired or wireless signal using any of the known suitable communication techniques and/or protocols.

The control unit 60 is in particular configured to generate changes in the non-contact force. Such a change in the non-contact force will cause a change in the force equilibrium that the frame 20 is subjected to, which will cause the frame 20 to move relative to the container/hopper 10. As the frame 20 is in contact with the product during use, the movement of the frame 20 will subject the product to changing forces. Energy is transmitted to the product. This may help the movement of the product, in particular when e.g. solid materials have gotten stuck. Using the non-contact force, this frame 20 can be moved without the need of a mechanical connection between the actuator system 50 and the frame 20. This advantageously reduces the wear, maintenance, and possibilities of failures of components such as gaskets which are required in conventional systems. Moreover, this is achieved while the actuator system 50 is arranged outside of the hopper 10.

In some embodiments, the control unit 60 may be configured to generate discrete electromagnetic pulses for moving the frame 20. In other embodiments, the control unit 60 may be configured to generate a continuously changing non-contact force to move the frame 20 in vibration. For example, the non-contact force may change according to a sinusoidal function at a predetermined frequency.

The control unit 60 may comprise a processing unit 61 and a memory 62. The memory 62 may store computer-readable instructions, which the processing unit 61 is configured to execute. The memory 62 may further comprise stored data, e.g. relating to prior control of the actuator system 50. In embodiments, the control unit 60 may be or be part of a control unit for controlling a process in which the system 1 is used. Fig. 1a further illustrates that the control unit 60 may comprise a further communication terminal 63b for communicating with further components via communication signal 64b. This can e.g. relate to instructions from an operator, e.g. to start or stop the movement of the frame 20, or change the frequency or amplitude of the movement. It is also possible that sensor signals from sensors are provided to the control unit 60, such that the movement of the frame 20 can be controlled based on relevant actual process measurements.

Fig. 1a- 1f further illustrate that the system 1 comprises an equilibrium system which positions the frame 20 in an equilibrium position. In this example, the equilibrium system comprises a plurality of permanent magnets 41, 42, 43, 44, 45, 46, 47, 48, 49 that are arranged outside of the hopper 10. As is illustrated in more detail for permanent magnet 42 in the enlarged view in fig. 1d, the system 1 comprises a magnet holder 42b for each permanent magnet 42. The magnet holder 42b has a cap 42a which can be opened. This allows for easy inspection, maintenance, and replacement if larger or smaller magnetic forces are required.

The permanent magnets 41-49 exert a non-contact force on the frame 20, in particular on the permanent magnets 31-39 of the frame 20. As can be seen in the figures, each permanent magnet 41-49 is arranged in the vicinity of an associated permanent magnet 31-39 of the frame 20. Each set of associated magnets 41-49, 31-39 is arranged such that they repel each other. The non-contact force exerted onto the magnets 31-39 of the frame 20 depends on the distance to the associated magnet 41-49 of the equilibrium system. When the frame 20 is moved out of the equilibrium position, some magnets 31-39 will come closer to their associated magnets 41-49, which increases the biasing force between those respective associated magnets 31-39; 41,49. This in turn biases the frame 20 back into the equilibrium position.

The permanent magnets 41-49 of the equilibrium system are furthermore arranged slightly below their associated magnet 31-39 of the frame 20 (see e.g. fig. 1e), such that the repelling non-contact force that the frame 20 is subjected to, is partially directed upwards. The combination of the non-contact forces exerted by the equilibrium system, form a biasing force that biases the frame 20 in the equilibrium position. In the shown embodiment, this equilibrium position entails that the frame 20 is levitating contactless in the hopper 10. That is, there is no contact between the frame 20 and the hopper 10, or between the frame 20 and the equilibrium system. The frame 20 comes into contact with the product, during use.

The contactless levitating equilibrium position advantageously reduces the wear, maintenance, and possibilities of failures of components such as gaskets which are required in conventional systems. It will be understood that the number of permanent magnets 31-39; 41-49 and their positions can be selected in function of the size and shape of the container 10 and the frame 20, and the required non-contact. Said required non-contact forces may further be selected in function of the product, in particular the weight of the product.

In case the frame 20 needs to be taken out of the hopper 10, e.g. for maintenance, it may be desirable to reduce the biasing force. This can advantageously be done by moving the frame 20 from the operational position (shown in figs. 1a-1f) into a removable position. The frame 20 can be rotated around its longitudinal axis 10b (see fig. 1c) such that the permanent magnets 31-39 of the frame 20 are no longer aligned with the permanent magnets 41-49 of the equilibrium system. This can e.g. be achieved by rotating the frame 20 by 60 degrees. As the biasing force will be significantly reduced, it is easier for an operator to remove the frame 20 out of the hopper 10. Note that this is a relatively easy operation, which does not require removing any mechanical connections between the frame 20 and other components.

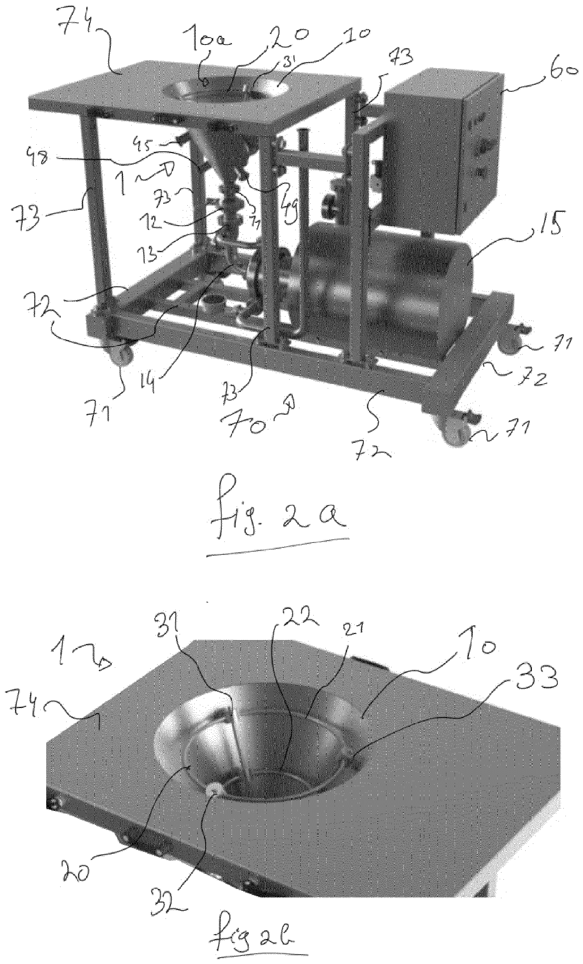

Fig. 2a-2b schematically illustrate a practical implementation of the system 1 shown in figs. 1a-1f. The system is arranged in a movable unit 70 comprising four wheels 71 for moving the movable unit 70. A bottom frame 72 and a vertical frame 73 are further provided for supporting the elements on the moveable unit 70. The product inlet 10a is an opening in a tabletop 74, which advantageously allows an operator to place the product on the tabletop 74 and then into the product inlet 10a.

An outlet pipe 14 is connected to the flange 13, such that the product outlet 11 is fluidly connected to the outlet pipe 14. The product is thus guided via the product outlet 11 into the outlet pipe 14, and then to a mixing installation 15. The mixing installation can e.g. be an inline mixer, a powder inline mixer, and can e.g. comprise shear pump for mixing the product with a further product. The further product may e.g. be liquid in which the (solid) product is to be mixed.

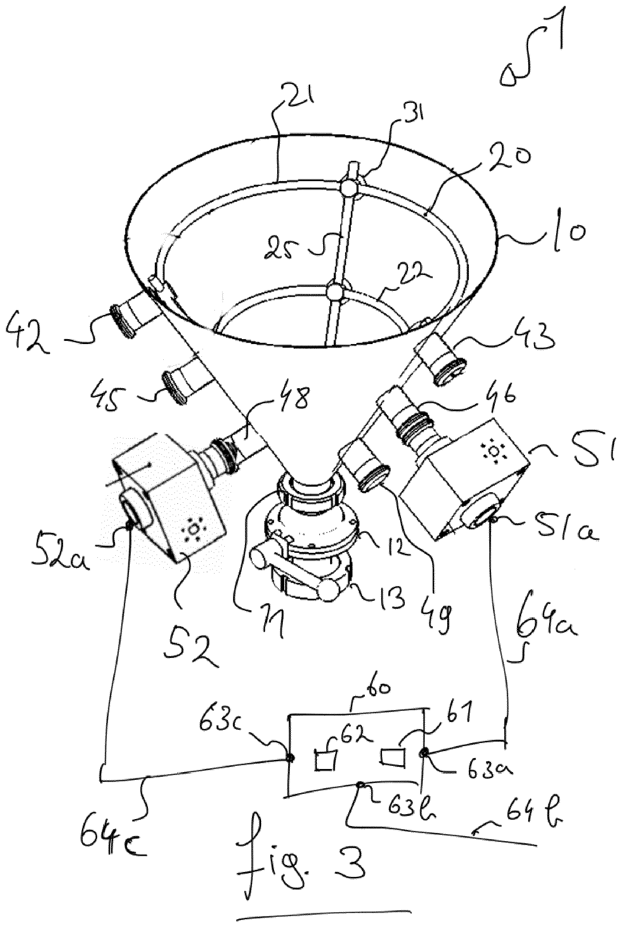

Fig. 3 schematically illustrates a further embodiment of a system 1, which in addition to the components shown in the previous figures, comprises a second non-contact actuator 52. The second non-contact actuator 52 and the first non-contact actuator 51 together form the actuator system 50, although it is envisaged that in other embodiments even more non-contact actuators can be provided. The first non-contact actuator 51 generates a first non-contact sub-force, and the second non-contact actuator 52 generates a second non-contact sub-force. The first and the second non-contact sub-force are part of the non-contact force generated by the actuator system 50.

The control unit 60 is also configured to control the second non-contact actuator 52, in this example by means of control signal 64c via communication terminals 52a, 63c. In advantageous embodiments, the control unit 60 is configured to control the first non-contact sub-force to change at a first frequency, and the second non-contact sub-force change at a second frequency. For example, the first non-contact sub-force may continuously change, following a sinusoidal pattern at the first frequency, and the second non-contact sub-force may continuously change, following a sinusoidal pattern at the second frequency.

The first frequency is different from the second frequency. As such, the frame 20 is exposed to a combination of non-contact sub-forces at different frequencies, at the same time. This has been found particularly advantageous to enhance the movement of the product. When only moving the frame at a single frequency, there may be some parts of the frame 20 that have very limited movement, and/or there may be parts of the product where only very limited movement is transferred to. These parts of the product may remain stuck when only a single frequency is used, which is overcome in the present embodiments.

The control unit 60 is configured to generate the first and second non-contact sub-force simultaneously. The frame 20 is thus being subjected to a force and movement that is the combination of at least two frequencies.

In particular embodiments, the first frequency and the second frequency may generate a beat patter as interference pattern. For example, the difference between the first and second frequency may be between 1-20 Hz, e.g. between 1-10 Hz, e.g. between 1-5 Hz. The first and second frequency can e.g. both be 1-1000 Hz, e.g. between 10-500 Hz, e.g. between 20-200 Hz.

In other particular embodiments, the second frequency may be an ultrasonic frequency, while the first frequency is not an ultrasonic frequency. It has been found that using an ultrasonic frequency is advantageous for transferring high frequency vibrations to the product, in particular when combined with the not-ultrasonic first frequency. In embodiments, the control unit 60 is configured to generate the first non-contact sub-force for a longer period of time than the second non-contact sub-force. It may e.g. be sufficient to provide to ultrasonic second frequency only for a limited periods of time to achieve the desired effect onto the product. These embodiments may then reduce energy consumption, since supplying a non-contact sub-force at ultrasonic frequency may be relatively energy consuming.

Although fig. 3 illustrates the combination of first and second frequencies using the first 51 and second non-contact actuator 52, it will be understood that these advantages can also be achieved using a single non-contact actuator 51. In that case, the first and second non-contact sub-force can both be generated by the first non-contact actuator 51. The non-contact force generated by the first non-contact actuator 51 is then the combination of the first and second non-contact sub-force. The combination may already be done by the control unit 60, such that the control signal 64a represents said combined signal.

As required, detailed embodiments of the present invention are described herein; however, it is to be understood that the disclosed embodiments are merely examples of the invention, which may be embodied in various ways. Therefore, specific structural and functional details disclosed herein are not to be construed as limiting, but merely as a basis for the claims and as a representative basis for teaching those skilled in the art to practice the present invention in various ways in virtually any suitable detailed structure. Not all of the objectives described need be achieved with particular embodiments.

Furthermore, the terms and expressions used herein are not intended to limit the invention, but to provide an understandable description of the invention. The words "a", "an", or "one" used herein mean one or more than one, unless otherwise indicated. The terms "a multiple of", "a plurality" or "several" mean two or more than two. The words "comprise", "include", "contain" and "have" have an open meaning and do not exclude the presence of additional elements. Reference numerals in the claims should not be construed as limiting the invention.

The mere fact that certain technical features are described in different dependent claims still allows the possibility that a combination of these technical measures can be used advantageously.

A single processor or other unit can perform the functions of various components mentioned in the description and claims, e.g. of processing units or control units, or the functionality of a single processing unit or control unit described herein can in practice be distributed over multiple components, optionally physically separated of each other. Any communication between components can be wired or wireless by known methods.

The actions performed by the control unit can be implemented as a program, for example computer program, software application, or the like. The program can be executed using computer readable instructions. The program may include a subroutine, a function, a procedure, an object method, an object implementation, an executable application, a source code, an object code, a shared library / dynamic load library and / or other set of instructions designed for execution on a computer system.

A computer program or computer-readable instructions can be stored and / or distributed on a suitable medium, such as an optical storage medium or a solid-state medium supplied with or as part of other hardware, but can also be distributed in other forms, such as via internet or other wired or wireless telecommunication systems.

## Claims

1. A system for moving a product, comprising:
• a container configured to receive the product, the container comprising a product outlet arranged in a lower part of the container;
• an actuator system configured to generate a non-contact force;
• a frame, wherein the frame is:
• arranged within the container and configured to be in contact with the product when the product is arranged in the container,
• configured to be moveable relative to the container,
• configured to be subjectable to the non-contact force generated by the actuator system;
• a control unit configured to control the actuator system, wherein the control unit is configured to generate changes in the non-contact force for moving the frame relative to the container.

2. System according to claim 1, wherein the control unit is configured to control the actuator system to generate simultaneously:
• a first non-contact sub-force changing at a first frequency, and
• a second non-contact sub-force changing at a second frequency.

3. System according to the preceding claim, wherein the first frequency and the second frequency generate a beat pattern as interference pattern.

4. System according to claim 2, wherein the second frequency is an ultrasonic frequency.

5. System according to any of the claims 2-4, wherein the actuator system comprises at least a first non-contact actuator and a second non-contact actuator, wherein the control unit is configured to
• control the first non-contact actuator to generate the first non-contact sub-force, and
• control the second non-contact actuator to generate the second non-contact sub-force.

6. System according to any of the preceding claims, further comprising an equilibrium system configured to position the frame in an equilibrium position, wherein the equilibrium system is configured to provide a biasing force that causes the frame to levitate contactless within the container in said equilibrium position.

7. System according to any of the preceding claims 1-5, further comprising an equilibrium system configured to position the frame in an equilibrium position, wherein the equilibrium system comprises at least one resilient member configured to exert a biasing force onto the frame.

8. System according to any of the preceding claims, wherein the equilibrium system comprises a plurality of permanent magnets arranged outside of the container.

9. System according to any of the preceding claims, wherein the actuator system is arranged outside of the container.

10. System according to any of the preceding claims, wherein the frame comprises at least a removable position and an operational position, wherein the frame is configured to be moved from the removable position to the operational position by rotating the frame around a longitudinal axis.

11. System according to any of the preceding claims, wherein the container is a hopper.

12. System according to any of the preceding claims, wherein the non-contact force is an electromagnetic force, magnetic force, or electric force.

13. System according to any of the preceding claims, wherein the product comprises a solid material, e.g. powder, granules, or pellets.

14. Method for moving a product, comprising a step of using a system according to any of the preceding claims.

15. Method for moving a product, comprising the following steps:
• arranging the product in a container, wherein a frame is arranged in the container and the frame is in contact with the product,
• generating a non-contact force
• subjecting the frame to the non-contact force,
• generating changes in the non-contact force for moving the frame relative to the container.
